# EUROPÄISCHE PATENTSCHRIFT

(11) **EP 4 320 314 B1**
(45) Veröffentlichungstag und Bekanntmachung des Hinweises auf die Patenterteilung: **30.04.2025**
(21) Anmeldenummer: 22712404.7
(22) Anmeldetag: 10.03.2022
(51) Int. Cl.: E02D 7/18, G01M 5/00

(54) **VERFAHREN ZUM BEURTEILEN DER AXIALEN TRAGFÄHIGKEIT EINES EINGEBRACHTEN PFAHLS**
METHOD FOR ASSESSING THE AXIAL LOAD-BEARING CAPACITY OF AN INSTALLED POLE
PROCÉDÉ D'ÉVALUATION DE LA CAPACITÉ DE CHARGE AXIALE D'UN POTEAU INSTALLÉ

(30) Priorität: 08.04.2021 DE 102021108780
(43) Veröffentlichungstag der Anmeldung: 14.02.2024
(73) Patentinhaber: RWE Offshore Wind GmbH, 45141 Essen (DE)
(72) Erfinder: BARTMINN, Daniel, 25335 Elmshorn (DE); HERWIG, Volker, 20255 Hamburg (DE); MATLOCK, Benjamin, 22765 Hamburg (DE)
(74) Vertreter: Cohausz & Florack
(86) Internationale Anmeldenummer: PCT/EP2022/056252
(87) Internationale Veröffentlichungsnummer: WO 2022/214271

(56) Entgegenhaltungen:
- DE-A1- 102006 060 643

## Beschreibung

Die Anmeldung betrifft ein Verfahren zum Beurteilen der axialen Tragfähigkeit eines eingebrachten Pfahls. Darüber hinaus betrifft die Anmeldung ein Messsystem, ein Computerprogrammprodukt, ein Messset und eine Vibratorvorrichtung.

Zur Erzeugung von elektrischer Energie werden vermehrt Windparks in Offshore-Gebieten errichtet. Die Vorteile von Offshore-Standorten sind die höhere Windwahrscheinlichkeit und die im Durchschnitt höheren Windstärken. Hieraus resultiert - insbesondere verglichen mit Onshore-Standorten - ein erhöhter elektrischer Energieertrag eines in einem Offshore-Gebiet errichteten Windparks.

Ein Offshore-Windpark verfügt in der Regel über eine Vielzahl von Offshore-Bauwerken, wie einer Mehrzahl von Offshore-Windraftanlagen, mindestens einer Offshore-Umspannstation und/oder mindestens einem Offshore-Messmast.

Derartige Offshore-Bauwerke, aber auch andere Onshore- und Offshore-Bauwerke (z.B. Ölbohrplattformen oder dergleichen), werden in der Regel mit mindestens einem Pfahl auf bzw. in dem Unterwasserboden gegründet. Bei der Installation eines Offshore-Bauwerks wird an dem gewünschten Installationsort zunächst mindestens ein Pfahl in den Unterwasserboden eingebracht.

Das Einbringen eines Pfahls erfolgt beim Stand der Technik durch einen Schlaghammer und/oder durch eine Vibratorvorrichtung. Durch einen Schlaghammer, auch Rammhammer genannt, werden Stoßimpulse auf den Kopf des Pfahls ausgeübt, um den Pfahl auf eine gewünschte Einbindetiefe einzubringen. Eine Vibratorvorrichtung überträgt auf einen Pfahl Impulsfolgen bzw. Vibrationen/Schwingungen. Die auf den Pfahl übertragenen Impulsfolgen führen zu einer Verflüssigung des Unterwasserbodens, so dass der Pfahl in den Unterwasserboden eingebracht wird.

Nach einem Einbringen eines Pfahls in einen Boden kann es allgemein erforderlich sein, die axiale Tragfähigkeit des eingebrachten Pfahls zu bestimmen. Insbesondere kann es erforderlich sein, einen Nachweis über eine ausreichende axiale Tragfähigkeit des eingebrachten Pfahls zu erbringen.

Hierzu wird im Stand der Technik insbesondere bei Offshore-Pfählen eine sogenannte dynamische Probebelastung mittels des Rammhammers durchgeführt. Bei der dynamischen Probebelastung wird ein Pfahl mit einem (kurzen) Stoßimpuls belastet, indem der Pfahlkopf durch das Auftreffen des Rammhammers kurzzeitig belastet wird. Der erzeugte Rammimpuls läuft in der Folge als Impulswelle bzw. Dehnwelle von dem Pfahlkopf zu dem Pfahlfuß des eingebrachten Pfahls. An dem Pfahlfuß wird die erzeugte Impulswelle reflektiert und läuft zu dem Pfahlkopf (gedämpft) zurück.

Durch mindestens einen an dem Pfahl angebrachten Bewegungsdatensensor kann die reflektierte Impuls- bzw. Dehnwelle erfasst werden. Die erfassten Bewegungsdaten können mit einem vorgegebenen Verfahren (z.B. CAPWAP-Verfahren) ausgewertet werden, um ein Tragfähigkeitskriterium zu bestimmen. Dieses kann dann beispielweise unter Nutzung eines vorgegebenen Nachweiskriteriums (z.B. ein Mindestfestwachsfaktor) ausgewertet werden, um zu bestimmen, ob eine ausreichende axiale Tragfähigkeit des eingebrachten Pfahls vorliegt oder nicht.

Nachteilig bei dem beschriebenen Stand der Technik ist, dass für die Durchführung der dynamischen Probebelastung stets nach der Einbringung des Pfahls ein Rammhammer erforderlich ist, um den Rammimpuls auf den Pfahl auszuüben. Dies ist insbesondere bei einem Einsatz einer Vibratorvorrichtung von Nachteil, da in diesem Fall zusätzlich ein Rammhammer im Anschluss an die Einbringung des Pfahls erforderlich ist. Dies erhöht den Aufwand bei der Installierung von Pfählen und insbesondere bei der Erbringung eines Nachweises einer ausreichenden (axialen) Tragfähigkeit erforderlich.

Ferner betrifft die DE 10 2006 060643 A1 ein Verfahren zum Einbringen von langgestreckten Profilen, wobei während des Einbringvorgangs die dynamische Beanspruchung am Profil gemessen wird.

Daher liegt der Anmeldung die Aufgabe zugrunde, eine Möglichkeit zu schaffen, welche eine Reduktion des Aufwands bei der Installierung von Pfählen und insbesondere bei der Erbringung eines Nachweises einer ausreichenden (axialen) Tragfähigkeit ermöglicht.

Die Aufgabe wird gemäß einem ersten Aspekt der Anmeldung gelöst durch ein Verfahren gemäß Anspruch 1. Das Verfahren dient zum Bestimmen, insbesondere Beurteilen, der (axialen) Tragfähigkeit eines eingebrachten Pfahls. Das Verfahren umfasst:
- Beaufschlagen, durch eine an dem eingebrachten Pfahl angeordnete Vibratorvorrichtung, des eingebrachten Pfahls mit einer Messimpulsfolge während mindestens einer Vibrationszeitdauer,
- Erfassen, durch mindestens ein Erfassungsmodul, von durch die Messimpulsfolge hervorgerufenen Bewegungsdaten des eingebrachten Pfahls während einer Messzeitdauer,
- Bestimmen mindestens eines Abwärtsbewegungsdatensatzes aus den erfassten Bewegungsdaten, und
- Auswerten des Abwärtsbewegungsdatensatzes, derart, dass ein Tragfähigkeitskriterium bestimmt wird.

Indem im Gegensatz zum Stand der Technik bei dem anmeldungsgemäßen Verfahren eine Vibratorvorrichtung anstelle eines Rammhammers eingesetzt wird, wird eine Reduktion des Aufwands bei der Installierung von Pfählen und insbesondere bei der Erbringung eines Nachweises einer ausreichenden (axialen) Tragfähigkeit ermöglicht. Insbesondere wird anmeldungsgemäß anstelle eines Rammstoßes durch einen Rammhammer der Pfahl mit einer Messimpulsfolge beaufschlagt, so dass eine entsprechende Mehrzahl von Impuls- bzw. Dehnwellen erzeugt wird, und die resultierenden Bewegungsdaten derart ausgewertet, dass eine Tragfähigkeit des eingebrachten Pfahls beurteilt werden kann.

Das anmeldungsgemäße Verfahren dient zur Beurteilung, ob ein in einen Boden auf eine bestimmte Einbindetiefe eingebrachter Pfahl eine ausreichende Tragfähigkeit aufweist oder nicht, insbesondere eine ausreichende axiale Tragfähigkeit aufweist.

Der Pfahl ist insbesondere zumindest ein Teil einer Gründung eines Bauwerks. Ein Bauwerk kann insbesondere durch die Gründung und mindestens eine durch die Gründung zu tragende Einrichtung gebildet sein.

Das Bauwerk ist vorliegend vorzugsweise ein Offshore-Bauwerk. Besonders bevorzugt kann das Offshore-Bauwerk ein Offshore-Bauwerk eines Offshore-Windparks sein, wie eine Offshore-Windraftanlage, eine Offshore-Umspannstation und/oder ein Offshore-Messmast. Ferner kann ein Offshore-Bauwerk eine Bohr- oder Förderplattform (z.B. Öl- oder Gasplattform) oder eine andere Offshore-Plattform sein, vorzugsweise eingerichtet zur Gewinnung, Umwandlung und/oder Speicherung von Energie, wie z.B. eine Offshore-Anlage zur Produktion von Wasserstoff. Das Offshore-Bauwerk kann den eingebrachten Pfahl umfassen.

Eine Gründung eines Offshore-Bauwerks ist vorzugsweise eine Monopile-, Tripod-, Tripile- oder Jacket-Gründung. Durch eine derartige Gründung kann ein Offshore-Bauwerk auf bzw. in dem Unterwasserbaugrund bzw. Unterwasserboden, insbesondere einem Meeresboden, direkt verankert werden.

Ein anmeldungsgemäßer Pfahl meint insbesondere eine turmförmige, insbesondere zylinderförmige Gründungsstruktur, bevorzugt in Form eines Hohlstrukturelements. Ein derartiger Pfahl weist in der Regel eine sich in Längsrichtung bzw. axialer Richtung erstreckende, umlaufende Pfahlwandung auf, wobei die Pfahlwandung unterseitig mit einer unterseitigen Stirnfläche und oberseitig mit einer oberseitigen Stirnfläche begrenzt ist. Hierbei beziehen sich die Angaben "ober", "unter" etc. auf den eingebrachten Zustand des Pfahls. Das oberseitige Ende des Pfahls kann auch als Pfahlkopf und das unterseitige Ende des Pfahls als Pfahlfuß bezeichnet werden.

Ein anmeldungsgemäßer Pfahl kann aus einem metallischen Material bzw. Werkstoff hergestellt sein. Stahl eignet sich insbesondere aufgrund seiner Festigkeits- und Steifigkeitseigenschaften besonders gut für eine derartige Gründungsstruktur. Alternativ oder zusätzlich kann ein Pfahl aus einem mineralischen Baustoff hergestellt sein. Der mineralische Baustoff ist vorzugsweise Beton, der aus Zement, Kies, Sand und Wasser angemischt ist und insbesondere nach dem Vergießen ausgehärtet ist.

Darüber hinaus weist ein anmeldungsgemäßer Pfahl vorzugsweise eine kreisförmige Querschnittsfläche auf. Bei anderen Varianten der Anmeldung kann auch eine andere Querschnittsfläche vorgesehen sein, wie eine ovalförmige, rechteckförmige oder dergleichen. Vorzugsweise bleibt die Querschnittsfläche in Längsrichtung konstant. Bei anderen Varianten kann sich die Querschnittsfläche auch ändern, beispielsweise in Richtung Pfahlfuß verjüngen.

Anmeldungsgemäß wird ein eingebrachter Pfahl mit einer Messimpulsfolge (auch als Messvibrationen bzw. Messschwingungen bezeichnet) beaufschlagt. Ein eingebrachter Pfahl ist anmeldungsgemäß insbesondere ein Pfahl, der mit einer bestimmten bzw. gewünschten Einbindetiefe in einem Boden eingebracht ist. Vorzugsweise kann der Pfahl mit einer Vibratorvorrichtung einvibriert worden sein. Vorstellbar ist aber auch die Nutzung einer anderen Vorrichtung.

Zum Beaufschlagen des Pfahls mit einer Messimpulsfolge wird anmeldungsgemäß eine Vibratorvorrichtung eingesetzt. Die Vibratorvorrichtung kann insbesondere mit dem Pfahl (vorzugsweise dem Pfahlkopf) kraftschlüssig verbunden sein. Die Vibratorvorrichtung kann eingerichtet sein, in vertikaler Richtung (also in Längsrichtung des eingebrachten Pfahls) Messschwingungen bzw. eine Messimpulsfolge zu erzeugen. Beispielsweise kann die Vibratorvorrichtung über eine Exzentereinrichtung verfügen, die über einen Antrieb der Vibratorvorrichtung angetrieben werden kann. Die insbesondere paarweise angeordneten Exzenter der Exzentereinrichtung können vorzugsweise mit derselben Winkelgeschwindigkeit drehen, jedoch in entgegengesetzter Richtung. Die zumindest zwei Exzenter können Zentrifugalkräfte erzeugen. Hierbei können sich die horizontalen Kräfte aufheben, während sich die vertikalen Komponenten zu einer Gesamt-Zentrifugalkraft addieren können. Die hierdurch erzeugten Impulse bzw. Schwingungen können aufgrund der kraftschlüssigen Verbindung der Vibratorvorrichtung mit dem Pfahl auf den Pfahl übertragen werden. Hierdurch werden eine Vielzahl von Impuls- bzw. Dehnwellen erzeugt.

Das Beaufschlagen des Pfahls mit einer Messimpulsfolge erfolgt während einer Vibrationszeitdauer.

Während einer Messzeitdauer erfolgt bei dem anmeldungsgemäßen Verfahren ein Erfassen von Bewegungsdaten des Pfahls. Die Bewegungsdaten werden durch die Messimpulsfolge bzw. die Messschwingungen verursacht. Insbesondere werden die Bewegungsdaten der erzeugten Impuls- bzw. Dehnwellen erfasst.

Die erfassbaren Bewegungsdaten umfassen insbesondere Kraftparameterwerte und/oder Geschwindigkeitsparameterwerte. Vorzugsweise können an dem Pfahl (insbesondere am Pfahlkopf) die Stauchung (Kraft) und/oder die Beschleunigung (Geschwindigkeit und Weg) gemessen werden.

Vorzugsweise kann eine Messeinrichtung, umfassend das Erfassungsmodul, mindestens einen Bewegungsdatensensor umfassen und/oder mit mindestens einem Bewegungsdatensensor verbunden sein. Bei einem bevorzugten Ausführungsbeispiel kann die Messeinrichtung mindestens einen (vorzugsweise genau zwei) Dehnungssensor(en) und/oder mindestens einen (vorzugsweise genau zwei) Beschleunigungssensor(en) umfassen und/oder mit mindestens einem (vorzugsweise genau zwei) Dehnungssensor(en) und/oder mindestens einem (vorzugsweise genau zwei) Beschleunigungssensor(en) verbunden sein. Der mindestens eine Bewegungsdatensensor kann an dem Pfahlkopf befestigt sein.

Vorzugsweise umfasst die Vibrationszeitdauer die Messzeitdauer, wobei die Messzeitdauer vorzugsweise kürzer ist als die Vibrationszeitdauer. Dies meint insbesondere, dass die Messzeitdauer innerhalb der Vibrationszeitdauer liegt. Vorzugsweise kann sich die Vibrationszeitdauer aus einer Anlaufzeitdauer, einer sich daran (unmittelbar) anschließenden Messzeitdauer und insbesondere einer sich daran (unmittelbar) anschließenden Abklingzeitdauer zusammensetzen. Die Anlaufzeitdauer bzw. Vorlaufphase ist insbesondere die Zeitdauer, während der die Vibratorvorrichtung von einer Frequenz 0 bis auf eine (bestimmte) Mindestmessfrequenz hochgefahren wird, ab der die vorgenannte Erfassung erfolgen kann. Die Abklingzeitdauer bzw. Nachlaufphase ist insbesondere die Zeitdauer, während der die Vibratorvorrichtung nach der Messzeitdauer wieder auf die Frequenz 0 heruntergefahren wird.

Darüber hinaus erfolgt anmeldungsgemäß ein Bestimmen mindestens eines Abwärtsbewegungsdatensatzes aus den erfassten Bewegungsdaten. Anmeldungsgemäß ist es erkannt worden, dass, um die Tragfähigkeit des eingebrachten Pfahls beurteilen zu können, es erforderlich ist, die von der Vibratorvorrichtung durch eine Abwärtsbewegung (also eine Bewegung der Vibratorvorrichtung in Richtung Pfahlfuß) erzeugte (und insbesondere am Pfahlfuß reflektierte) Impulswelle bzw. Dehnwelle zu identifizieren, also insbesondere die zugehörigen Bewegungsdaten dieser Impulswelle zu bestimmen.

Die zu einer Impulswelle zugehörigen Bewegungsdaten werden anmeldungsgemäß insbesondere als Abwärtsbewegungsdaten bezeichnet. Hierbei kann ein Abwärtsbewegungsdatensatz einer Abwärtsbewegung bzw. einer entsprechenden Impulswelle zugeordnet werden, also insbesondere nur die Daten einer Impulswelle enthalten.

Bei Varianten der Anmeldung können auch Daten von zwei oder mehr Impulswellen enthalten sein.

Gemäß einer bevorzugten Ausführungsform kann das Bestimmen des Abwärtsbewegungsdatensatzes bzw. der entsprechenden Bewegungsparameterwerte ein Anwenden einer Filterfunktion auf die erfassten Bewegungsdaten bzw. Bewegungsparameterwerte umfassen.

Die Filterfunktion ist insbesondere mit der Vibratorvorrichtung bzw. der erzeugten Messimpulsfolge synchronisiert bzw. auf diese abgestimmt und/oder berücksichtigt die Pfahldimensionen (z.B. Länge des Pfahls, Durchmesser des Pfahls, Durchmesser der Pfahlwandung, Querschnittsform des Pfahls etc.). Die Filterung durch die Filterfunktion erfolgt insbesondere derart, dass aus den gesamten erfassten Bewegungsdaten die Abwärtsbewegungsdaten bestimmt werden, die durch eine Reflexion der mindestens einen durch eine Abwärtsbewegung erzeugten Impulswelle an dem Pfahlfuß hervorgerufen wurden, also die Bewegungsdaten der reflektierten Impulswelle sind. Anders ausgedrückt werden die durch eine Abwärtsbewegung der Vibratorvorrichtung erzeugte und am Pfahlfuß reflektierte Wellendaten, also der entsprechende Abwärtsbewegungsdatensatz, enthaltend insbesondere die Stauchungs- und Beschleunigungsparameterwerte, durch die Filterfunktion identifiziert.

Der mindestens eine bestimmte, insbesondere identifizierte Abwärtsbewegungsdatensatz (bei einer bevorzugten Ausführungsform können eine Mehrzahl von Abwärtsbewegungsdatensätze von einer entsprechenden Mehrzahl von Abwärtsbewegungen bestimmt werden) wird anschließend ausgewertet, insbesondere hinsichtlich der (axialen) Tragfähigkeit des eingebrachten Pfahls.

Das Auswerten des mindestens einen Abwärtsbewegungsdatensatzes kann, gemäß einer bevorzugten Ausführungsform, mittels Modellbildung auf der Grundlage der Wellentheorie erfolgen, z.B. basierend auf dem CAPWAP-Verfahren, TNOWAVE-Verfahren oder CASE Verfahren (diese Verfahren sind dem Fachmann bekannt).

Beispielsweise kann ein Pfahl-Boden-Modell (CAPWAP) durch inverse Systemidentifikation anhand des mindestens einen Abwärtsbewegungsdatensatzes entwickelt werden, aus welchem dann die statischen Pfahlwiderstände (vorzugsweise Mantelreibung und/oder Spitzendruck) abgeleitet werden können, um zu bestimmen, ob eine ausreichende (axiale) Tragfähigkeit des eingebrachten Pfahls vorliegt (oder nicht).

Es kann anmeldungsgemäß also ein Tragfähigkeitskriterium bestimmt werden, wie ein Mantelreibungs- und/oder Spitzendruckkriterium. Insbesondere kann/können als Tragfähigkeitskriterium eine Widerstand-Setzungslinie und/oder ein Verteilung von Pfahlmantel- und Pfahlfußwiderstand durch das Auswerten der bestimmten Bewegungsdaten bestimmt werden.

Ein Nachweiskriterium für eine ausreichende Tragfähigkeit des Pfahls kann zum Beispiel eine vorgegebene Grenztragfähigkeit (z.B. Grenzmantelreibung und/oder Grenzspitzendruck) sein, welche einzuhalten ist, damit ein eingebrachter Pfahl als ein Pfahl mit einer ausreichenden (axialen) Tragfähigkeit bewertet wird.

Wird also das Kriterium nicht eingehalten, ist die axiale Tragfähigkeit nicht ausreichend. Beispielsweise können dann weitere Maßnahmen ergriffen werden (beispielsweise kann der Pfahl tiefer eingebunden werden) und ggf. ein erneutes Durchführen des vorliegenden Verfahrens durchgeführt werden.

Gemäß einer weiteren Ausführungsform des anmeldungsgemäßen Verfahrens können nach einer Abklingzeitdauer (und ggf. einer weiteren (vorgebbaren) Wartezeitdauer die (vorbeschriebenen) Schritte Beaufschlagen, Erfassen und Bestimmen erneut durchgeführt werden. Die weitere Wartezeitdauer kann auch als zweite Festwachszeitdauer bezeichnet werden, die insbesondere kürzer als eine erste (nachfolgend noch näher beschriebene) Festwachszeitdauer sein kann.

Insbesondere kann diese Testprozedur, also Beaufschlagen, Erfassen und Bestimmen, mehrmals durchgeführt werden, jeweils unterbrochen zumindest um die genannte Abklingzeitdauer (und ggf. der genannten Wartezeitdauer). Anschließend kann eine (gemeinsame) Auswertung der jeweils bestimmten Abwärtsbewegungsdatensätze erfolgen. Durch eine entsprechende Testung kann eine exaktere Auswertung erfolgen. Es versteht sich, dass auch nach jeder Testprozedur eine Auswertung erfolgen kann.

Gemäß einer weiteren Ausführungsform des anmeldungsgemäßen Verfahrens kann das Erfassen der Bewegungsdaten (bzw. parameterwerte) (durch die Messeinrichtung) mit einer Abtastrate von zumindest 10.000 Werten pro Sekunde erfolgt, insbesondere mit einer Abtastrate von zumindest 40.000 Werten pro Sekunde (und beispielweise höchstens 200.000 Werten pro Sekunde). Dies ermöglicht eine Bestimmung, insbesondere Identifizierung, einzelner Abwärtsbewegungen der Vibratorvorrichtung und eine anschließende Bestimmung insbesondere Identifizierung, (durch z.B. die beschriebene Filterfunktion) der von einer identifizierten Abwärtsbewegung hervorgerufenen und an dem Pfahlfuß reflektierten Impulswelle. Insbesondere können durch die Messgeber bzw. -sensoren und des Erfassungsmoduls, umfassend mindestens einen A/D-Wandler eines Datenloggers, Bewegungsdaten mit einer Abtastrate zwischen 10.000 Werten pro Sekunde und 40.000 Werten pro Sekunde aufgezeichnet werden (z.B. PDI Messsystem).

Es ist ferner erkannt worden, dass für eine verlässliche Beurteilung der Tragfähigkeit des Pfahls dieser während der Messzeitdauer nicht (wesentlich) tiefer in den Boden eingebracht werden sollte. Gemäß einer bevorzugten Ausführungsform des anmeldungsgemäßen Verfahrens wird insbesondere vorgeschlagen, dass eine maximale Messfrequenz der Messimpulsfolge (während der Messzeitdauer) zumindest unterhalb einer (vorgegebenen) Grenzfrequenz liegt. Die maximale Messfrequenz kann insbesondere derart gewählt werden, dass sichergestellt ist, dass sich der Boden am Installationsort nicht verflüssigt. Die Grenzfrequenz kann daher eine Frequenz sein, bei der sich der Boden noch nicht verflüssigt. Hierbei kann die Grenzfrequenz abhängig von den lokalen Bodenverhältnissen (z.B. Sandboden oder ein bindiger Boden (z.B. Tonboden) am Installationsort vorgegeben werden.

Gemäß erfindungsgemäßen Verfahren beträgt eine maximale Messfrequenz der Messimpulsfolge (während der Messzeitdauer) maximal 80 % der (maximalen) Einbringungsfrequenz, bevorzugt maximal 60 % der (maximalen) Einbringungsfrequenz, besonders bevorzugt maximal 40 % der (maximalen) Einbringungsfrequenz. Die (maximale) Einbringungsfrequenz meint insbesondere die (maximale) Frequenz, mit der der Pfahl in die bestimmte Einbringungstiefe eingebracht wird. Anders ausgedrückt, ist die (maximale) Einbringungsfrequenz insbesondere die beim vorherigen Einbringen des Pfahls in die bestimmte Einbringungstiefe maximale verwendete Einbringungsfrequenz. Hierbei ist zu beachten, dass die Einbringungsfrequenz insbesondere von der Bodenart bzw. den Bodenverhältnissen an dem Installationsort des Pfahls abhängen kann. In entsprechender Weise kann dann die maximale Messfrequenz von der Bodenart abhängen.

Darüber hinaus kann, gemäß einer weiteren Ausführungsform des anmeldungsgemäßen Verfahrens, eine maximale Messfrequenz der Messimpulsfolge höchstens 10 Hz (während der Messzeitdauer) betragen, bevorzugt höchstens 8 Hz, besonders bevorzugt höchstens 6 Hz. Die Messfrequenz kann während der Messzeitdauer zwischen 1 Hz und 10 Hz liegen, vorzugsweise zwischen 2 Hz und 8 Hz, besonderes bevorzugt zwischen 3 Hz und 7 Hz.

Für eine besonders exakte und gleichzeitig effektive Auswertung kann, gemäß einer weiteren Ausführungsform des anmeldungsgemäßen Verfahrens, die Messzeitdauer zwischen 0,5 Minuten und 20 Minuten liegen, bevorzugt zwischen 1,5 Minuten und 15 Minuten, besonders bevorzugt zwischen 2,5 Minuten und 7,5 Minuten. Die Messzeitdauer kann zumindest von der Bodenart abhängen (ebenso wie die Einbringungszeitdauer).

Gemäß einer besonders bevorzugten Ausführungsform des anmeldungsgemäßen Verfahrens kann vor dem Beaufschlagen des eingebrachten Pfahls mit der Messimpulsfolge für eine (vorgebbare) (erste) Festwachszeitdauer der eingebrachte Pfahl nicht mit Impulsen bzw. Schwingungen durch die Vibratorvorrichtung beaufschlagt werden. Währen der ersten Festwachszeitdauer ist der Pfahl also insbesondere vibrationsfrei.

Für eine besonders genaue Beurteilung kann vorzugsweise nach einem Einbringen des Pfahls auf eine bestimmte Einbindetiefe so lange mit der Beaufschlagung gewartet werden, bis sichergestellt ist, dass sich der Boden (ausreichend) gesetzt bzw. beruhigt hat. Die erste Festwachszeitdauer repräsentiert also insbesondere die Zeitdauer, während der keine Impulse durch die Vibratorvorrichtung auf den Pfahl übertragen werden. Die erste Festwachszeitdauer wird insbesondere derart gewählt, dass sich der aufgebaute Porenwasserüberdruck des Bodens sich zumindest weitgehend auf den ursprünglichen (also vor der Installation des Pfahls) Wert eingependelt hat.

Besonders bevorzugt kann die Festwachszeitdauer abhängig von der Bodenart (insbesondere Unterwasserbodenart) an dem Installationsort des Pfahls bestimmt werden, wobei die (erste) Festwachszeitdauer insbesondere zwischen 10 Minuten und einer Woche liegen kann, vorzugsweise zwischen einer Stunde und einem Tag. Die genannte zweite Festwachszeitdauer kann insbesondere kürzer sein als die erste Festwachszeitdauer und beispielsweise zwischen 1 Minute und 10 Minuten liegen.

Gemäß einer weiteren Ausführungsform des anmeldungsgemäßen Verfahrens kann das Verfahren ferner umfassen:
- Lösen, nach einem Einbringen des Pfahls auf eine bestimmte Einbindetiefe, einer kraftschlüssigen Verbindung zwischen der Vibratorvorrichtung und dem Pfahl,
- Aufrechterhalten der gelösten kraftschlüssigen Verbindung zwischen der Vibratorvorrichtung und dem Pfahl während einer Festwachszeitdauer,
- wobei das Beaufschlagen des eingebrachten Pfahls mit einer Messimpulsfolge während mindestens einer Vibrationszeitdauer ein erneutes Herstellen der kraftschlüssigen Verbindung zwischen der Vibratorvorrichtung und dem Pfahl während der Vibrationszeitdauer umfasst.

Wenn die kraftschlüssige Verbindung gelöst wird, werden keine Impulse (mehr) von der Vibratorvorrichtung auf den Pfahl übertragen (auch wenn die Vibratorvorrichtung weiterhin Vibrationen/Schwingungen erzeugt). Eine Abschaltung und ein Wiederanfahren der Vibratorvorrichtung können entfallen.

Zudem kann vorzugsweise eine vorbeschriebene Erfassung unmittelbar nach der Lösung der kraftschlüssigen Verbindung erfolgen.

Des Weiteren ist davon auszugehen, dass für eine Auswertung der erfassten Bewegungsdaten eine Durchführung des sogenannten kavitativen Vibrationsrammens zur eindeutigen Identifizierung der Abwärtsbewegungsdaten durch das Bestimmungsmodul von Vorteil ist. Daher wird gemäß einer bevorzugten Ausführung das kavitative Vibrationsrammen durchgeführt.

Ein weiterer Aspekt der Anmeldung ist ein Messsystem, insbesondere eingerichtet zum Beurteilen der (axialen) Tragfähigkeit eines eingebrachten Pfahls. Das Messsystem umfasst mindestens ein Steuermodul, eingerichtet zum Ansteuern einer an einem eingebrachten Pfahl angeordneten Vibratorvorrichtung, derart, dass die Vibratorvorrichtung den eingebrachten Pfahls mit einer Messimpulsfolge während mindestens einer Vibrationszeitdauer beaufschlagt wird. Das Messsystem umfasst mindestens ein Erfassungsmodul, eingerichtet zum Erfassen von durch die Messimpulsfolge bewirkten Bewegungsdaten des eingebrachten Pfahls während einer Messzeitdauer. Das Messsystem umfasst mindestens ein Bestimmungsmodul, eingerichtet zum Bestimmen mindestens eines Abwärtsbewegungsdatensatzes aus den erfassten Bewegungsdaten. Das Messsystem umfasst mindestens ein Auswertemodul, eingerichtet zum Auswerten des Abwärtsbewegungsdatensatzes, derart, dass ein Tragfähigkeitskriterium bestimmt wird (insbesondere basierend auf mindestens einem Nachweisekriterium).

Das Messsystem kann insbesondere durch das vorbeschriebene Verfahren ausgeführt werden.

Das Steuermodul, das Erfassungsmodul, das Bestimmungsmodul und das Auswertemodul können vorzugsweise in einer Messeinrichtung, umfassend mindestens einen Prozessor, integriert sein. Beispielsweise kann ein Computer die Messeinrichtung bilden.

Das Steuermodul ist zum Ansteuern der Vibratorvorrichtung eingerichtet. Das Erfassungsmodul kann insbesondere mit mindestens einem Bewegungsdatensensor verbunden sein. Der mindestens eine Bewegungsdatensensor liefert insbesondere ein (kontinuierliches) Sensorsignal, welches durch das Erfassungsmodul insbesondere in vorbeschriebener Weise abgetastet und aufgezeichnet werden kann.

Anschließend können die so erfassten Bewegungsdaten durch das Bestimmungsmodul in vorbeschriebener Weise weiterverarbeitet werden. Insbesondere kann das Bestimmungsmodul eine (zuvor beschriebene) Filterfunktion umfassen und diese auf die erfassten Bewegungsdaten anwenden. Diese verarbeiteten Bewegungsdaten können von dem Auswertemodul in vorbeschriebener Weise ausgewertet werden.

Gemäß einer weiteren Ausführungsform des anmeldungsgemäßen Messsystems kann das Messsystem mindestens eine mit einem Pfahl kraftschlüssig verbindbare Vibratorvorrichtung umfassen. Insbesondere kann eine lokale Steuerung der Vibratorvorrichtung mit dem Steuermodul des Messsystems über ein (drahtgebundenes und/oder drahtloses) Kommunikationsnetz verbindbar sein. Das Steuermodul kann die lokale Steuerung über das Kommunikationsnetz ansteuern. Das Steuermodul kann insbesondere einen Befehlsdatensatz aussenden, enthaltend Steuerbefehle, wie maximale Messfrequenz, Vibrationszeitdauer, Startzeitpunkt, Endzeitpunkt und/oder dergleichen.

Ferner kann das Messsystem, gemäß einer weiteren Ausführungsform, mindestens einen Bewegungsdatensensor umfassen. Beispielsweise kann die Messeinrichtung mindestens einen Bewegungsdatensensor umfassen und/oder mit mindestens einem Bewegungsdatensensor verbunden sein. Bei einem bevorzugten Ausführungsbeispiel kann das Messsystem mindestens einen (vorzugsweise genau zwei) Dehnungssensor(en) und/oder mindestens einen (vorzugsweise genau zwei) Beschleunigungssensor(en) umfassen. Der mindestens eine Bewegungsdatensensor kann gemäß einer Ausführungsform des Messsystems an dem Pfahlkopf befestigt sein.

Alternativ oder zusätzlich kann, gemäß einer weiteren Ausführungsform des Messsystems, an der Vibratorvorrichtung mindestens ein Bewegungsdatensensor angeordnet ist. Anmeldungsgemäß ist erkannt worden, dass aufgrund der kraftschlüssigen Verbindung bzw. Kopplung zwischen der Vibratorvorrichtung und dem Pfahl die Bewegungsdaten auch an der Vibratorvorrichtung gemessen werden können. Zudem wird die Vibratorvorrichtung während der Vibrationszeitdauer stets mit dem Pfahlkopf kraftschlüssig verbunden. Indem der mindestens eine Bewegungsdatensensor, vorzugsweise sämtliche Bewegungsdatensensoren, an der Vibratorvorrichtung (fest) angeordnet ist/sind, kann der Aufwand bei der Beurteilung der Tragfähigkeit signifikant reduziert werden. Insbesondere kann die aufwendige Anbringung (und anschließende Entfernung) des mindestens einen Bewegungsdatensensor an dem Pfahlkopf entfallen.

Ein weiterer Aspekt der Anmeldung ist eine Vibratorvorrichtung zum Einbringen eines Pfahls in einen Boden. Die Vibratorvorrichtung umfasst mindestens ein Befestigungsmodul, eingerichtet zum kraftschlüssigen Befestigen der Vibratorvorrichtung an dem Pfahl(-kopf). Die Vibratorvorrichtung umfasst mindestens einen an der Vibratorvorrichtung angeordneten Bewegungsdatensensor (wie insbesondere zuvor beschrieben wurde).

Die Vibratorvorrichtung **ist** ein Teil des vorbeschriebenen Messsystems eeinund/oder wird von dem vorbeschriebenen Messsystem zur Durchführung der Beurteilung der Tragfähigkeit verwendet.

Ein noch weiterer Aspekt der Anmeldung ist ein Computerprogrammprodukt mit Instruktionen (bzw. Softwarecode) ausführbar auf einen Prozessor (insbesondere einer zuvor beschriebenen Messeinrichtung), wobei die Instruktionen so angepasst sind, dass der Prozessor die folgenden Schritte ausführt:
- Ansteuern einer an einem eingebrachten Pfahl angeordneten Vibratorvorrichtung, derart, dass die Vibratorvorrichtung den eingebrachten Pfahls mit einer Messimpulsfolge während mindestens einer Vibrationszeitdauer beaufschlagt,
- Erfassen von durch die Messimpulsfolge bewirkten Bewegungsdaten des eingebrachten Pfahls während einer Messzeitdauer,
- Bestimmen mindestens eines Abwärtsbewegungsdatensatzes aus den erfassten Bewegungsdaten, und
- Auswerten des Abwärtsbewegungsdatensatzes, derart, dass ein Tragfähigkeitskriterium bestimmt wird (insbesondere basierend auf mindestens einem Nachweisekriterium).

Das Computerprogrammprodukt, insbesondere die Instruktionen bzw.

Programmanweisungen, können in einem Computerprogrammspeicher gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann eine Messeinrichtung einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor der Messeinrichtung kann beispielsweise Zwischenergebnisse oder ähnliches in dem Hauptspeicher speichern.

Insbesondere kann das Computerprogrammprodukt mehrere Softwaremodule umfassen, insbesondere zumindest ein vorbeschriebenes Steuermodul, ein vorbeschriebenes Erfassungsmodul, ein vorbeschriebenes Bestimmungsmodul und ein vorbeschriebenes Auswertemodul.

Ein noch weiterer Aspekt der Anmeldung ist ein Messset, umfassend mindestens eine Vibratorvorrichtung (z.B. umfassend mindestens einen an der Vibratorvorrichtung angebrachten Bewegungsdatensensor) und mindestens eine Messeinrichtung mit mindestens einem Prozessor, eingerichtet zum Ausführen des zuvor beschriebenen Computerprogrammprodukts.

Eine Einrichtung, ein Modul oder eine Vorrichtung kann vorliegend zumindest teilweise aus Software und/oder zumindest teilweise aus Hardware gebildet sein. Insbesondere kann eine Vorrichtung /ein Element geeignete Rechenelemente (z.B. Prozessor, Speicher, etc.) umfassen. Ferner sei angemerkt, dass Begriffe wie "erste", "zweite" keine Reihenfolge angeben, sondern lediglich zur Unterscheidung von Elementen dienen, wie der Festwachszeitdauer.

Die Merkmale der Verfahren, Messsystem, Vibratorvorrichtungen, Computerprogrammprodukte und Messsets sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Verfahren, das anmeldungsgemäße Messsystem, die anmeldungsgemäße Vibratorvorrichtung, das anmeldungsgemäße Computerprogrammprodukt und das anmeldungsgemäße Messset auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Beispiels eines Offshore-Bauwerks mit einem eingebrachten Pfahl,
- Fig. 2: eine schematische Ansicht eines Ausführungsbeispiels eines Messsystems gemäß der vorliegenden Anmeldung,
- Fig. 3: ein Diagramm eines Ausführungsbeispiels eines Verfahrens gemäß der vorliegenden Anmeldung,
- Fig. 4: ein Diagramm eines weiteren Ausführungsbeispiels eines Verfahrens gemäß der vorliegenden Anmeldung,
- Fig. 5: eine schematische Ansicht eines Ausführungsbeispiels einer Vibratorvorrichtung gemäß der vorliegenden Anmeldung, und
- Fig. 6: eine schematische Ansicht zur Illustration des Unterschieds zwischen dem so genannten kavitativen Vibrationsrammen und dem nicht-kavitativen Vibrationsrammen.

Nachfolgend werden für gleiche Elemente ähnliche Bezugszeichen verwendet. Ferner bezeichnet nachfolgend z die vertikale Achse bzw. Richtung und x eine horizontale Achse bzw. Richtung.

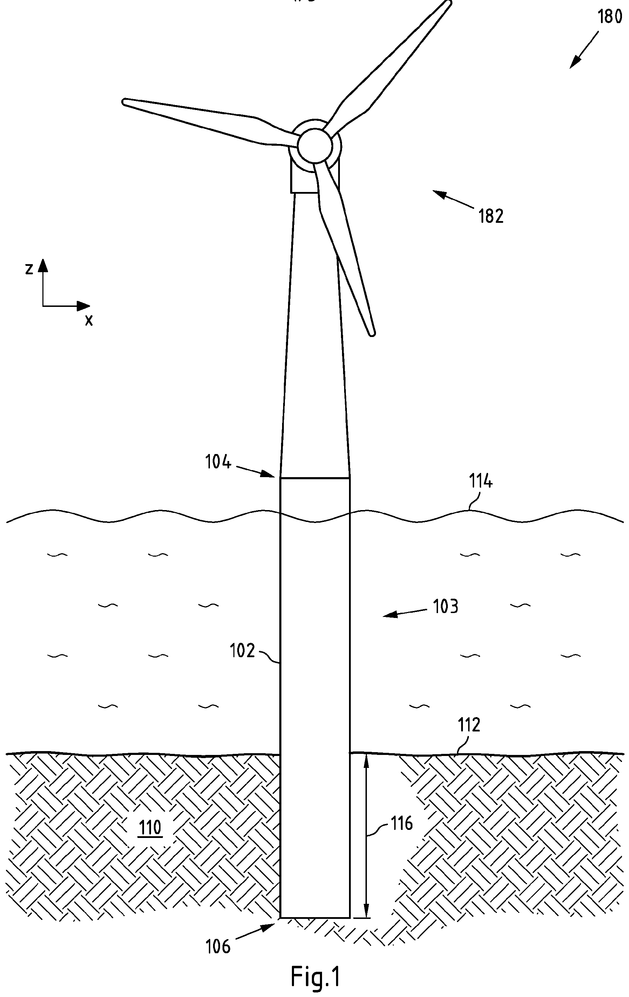

Die Figur 1 zeigt eine schematische Ansicht eines Beispiels eines Offshore-Bauwerks 180 mit einem eingebrachten Pfahl 102. Der eingebrachte Pfahl 102 bildet in dem gezeigten Beispiel die Gründung 103 des Offshore-Bauwerks 180.

Das Offshore-Bauwerk 180 ist insbesondere aus der Gründung 103 und einer Offshore-Einrichtung 182 gebildet. Wie aus der Figur 1 zu erkennen ist, handelt es sich bei dem Offshore-Bauwerk 180 vorliegend um eine Offshore-Windkraftanlage 180.

Bei der Offshore-Windkraftanlage 180 handelt es sich insbesondere um eine konventionelle Windkraftanlage 180. Die Windkraftanlage 180 verfügt als Offshore-Einrichtung 182 über einen Turm und einer auf dem Turm angeordneten Gondel. Mit Hilfe eines Umrichters wird die Windenergie in elektrische Energie gewandelt. Diese wird über einen Transformator und einer elektrischen Verbindung in ein internes Windparknetz eingespeist. Beispielsweise kann durch eine Offshore-Umspannstation eines Windparks die erzeugte elektrische Energie in ein Onshore-Verteilnetz gespeist werden.

Der Pfahl 102 kann aus Stahl und/oder Beton gebildet sein. Vorzugsweise kann der Pfahl 102 eine umlaufende Pfahlwandung aufweisen. Der Pfahl 102 weist ein (in dem dargestellten installierten bzw. eingebrachten Zustand) obiges Pfahlende 104 auf, auch Pfahlkopf 104 genannt, und ein unteres Pfahlende 106, auch Pfahlfuß 106 genannt.

Mit dem Bezugszeichen 114 ist die Wasseroberfläche, mit dem Bezugszeichen 112 die Bodenoberfläche (vorliegend eine Meeresbodenoberfläche) und mit dem Bezugszeichen 110 der Boden (vorliegend ein Meeresboden) bezeichnet. Wie zu erkennen ist, meint ein "eingebrachter Pfahl 102", dass der Pfahl 102 mit einer bestimmten Einbindetiefe 116 (von der Bodenoberfläche 112 bis zum Pfahlfuß 106) in dem Boden 110 eingebracht ist.

Das nachfolgend näher beschriebene anmeldungsgemäße Verfahren dient dazu, festzustellen, ob der eingebrachte Pfahl eine ausreichende (axiale) Tragfähigkeit aufweist. Die Durchführung des anmeldungsgemäßen Verfahrens kann insbesondere nach dem Einbringen des Pfahls in den Boden und vor einer Installierung der Offshore-Einrichtung erfolgen.

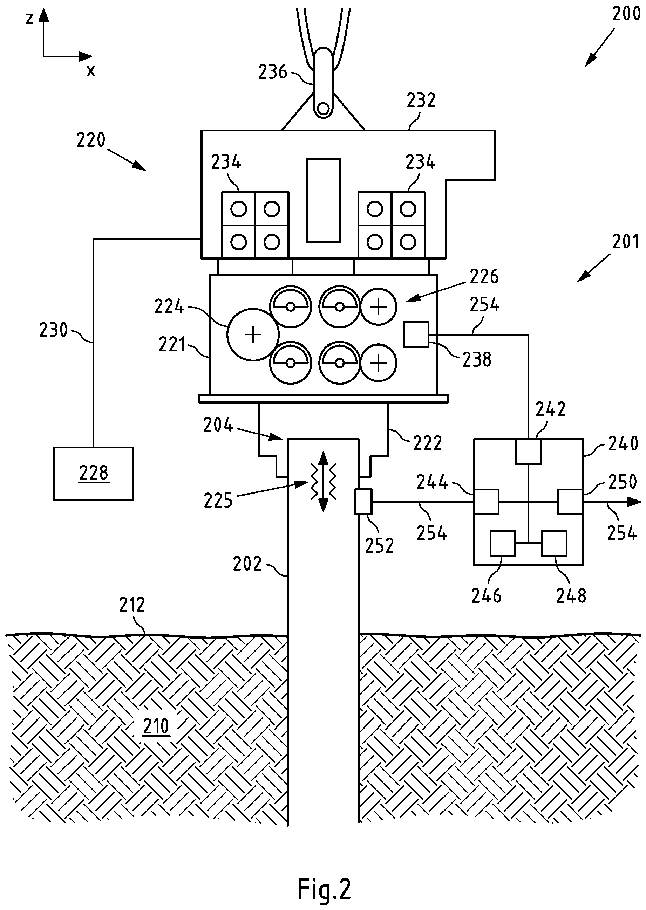

Die Figur 2 zeigt eine schematische Ansicht eines Ausführungsbeispiels eines Messsystems 200 gemäß der vorliegenden Anmeldung. Das Messsystem 200 kann in einer Ausführungsform nur durch eine Messeinrichtung 240 gebildet sein. Die Messeinrichtung 240 kann insbesondere durch eine Computereinrichtung 240 gebildet sein, welche mindestens einen Prozessor aufweist, um ein Computerprogrammprodukt auszuführen. Das Computerprogrammprodukt kann insbesondere durch die Module 242, 244, 246 und 248 gebildet sein.

Die Messeinrichtung 240 umfasst zumindest ein Steuermodul 242, eingerichtet zum Ansteuern einer an einem eingebrachten Pfahl 202 angeordneten Vibratorvorrichtung 220, derart, dass durch die Vibratorvorrichtung 220 den eingebrachten Pfahl 202 mit einer Messimpulsfolge während mindestens einer Vibrationszeitdauer beaufschlagt wird, ein Erfassungsmodul 244, eingerichtet zum Erfassen von durch die Messimpulsfolge hervorgerufenen Bewegungsdaten des eingebrachten Pfahls 202 während einer Messzeitdauer, ein Bestimmungsmodul 246, eingerichtet zum Bestimmen mindestens eines Abwärtsbewegungsdatensatzes aus den erfassten Bewegungsdaten, und ein Auswertemodul 248, eingerichtet zum Auswerten des Abwärtsbewegungsdatensatzes, derart, dass ein Tragfähigkeitskriterium bestimmt wird (insbesondere basierend auf mindestens einem Nachweisekriterium).

Die genannten Module 242, 244, 246 und 248 können vorzugsweise als Softwaremodule gebildet sein, welche von dem Prozessor der Messeinrichtung 240 ausführbar sind.

Ferner kann eine Messeinrichtung 240 ein Ausgabemodul 250 umfassen, eingerichtet zum Ausgeben des Auswerteergebnisses, wie eine Beurteilung, ob der eingebrachte Pfahl eine ausreichende Tragfähigkeit aufweist oder nicht.

Wie zu erkennen ist, kann mindestens ein (drahtloses und/oder drahtgebundenes) Kommunikationsnetz 254 für eine Kommunikation der Messeinrichtung 240 mit weiteren Komponenten vorgesehen sein, beispielsweise von der Vibratorvorrichtung 220.

Im vorliegenden Ausführungsbeispiel umfasst das Messsystem 200 (zusätzlich) eine Vibratorvorrichtung 220. Die Vibratorvorrichtung 220 ist eingerichtet, Schwingungen/Vibrationen in Form einer Messimpulsfolge mit einer bestimmten (maximalen) Messfrequenz zumindest während einer Vibrationszeitdauer zu erzeugen. Vorzugsweise kann die Vibratorvorrichtung 220 auch zum Einbringen des Pfahls 202 mit einer Einbringfrequenz, die insbesondere größer als die Messfrequenz ist, in den Boden eingesetzt werden.

Die hier beispielhaft dargestellte Vibratorvorrichtung 220 ist über ein Befestigungsmodul 222 an dem Pfahl 202 angeordnet, insbesondere den Pfahlkopf 204. Insbesondere kann mittels des Befestigungsmoduls 222 eine (temporäre) kraftschlüssige Verbindung zwischen der Vibratorvorrichtung 220 und dem Pfahl 202 hergestellt werden.

Ferner weist die Vibratorvorrichtung 220 einen ersten Grundkörper 221 (auch excitor block genannt) und einen zweiten mit dem ersten Grundkörper 221 über elastische Dämpfungselemente 234 verbundenen Grundkörper 232 (auch suppressor housing genannt) auf. Während der erste Grundkörper 221 ebenfalls die Schwingungen erfährt, ist der zweite Grundkörper 232 hiervon durch die Dämpfungselemente 234 im Wesentlichen entkoppelt. An dem zweiten Grundkörper 232 ist eine Aufhängung 236, beispielsweise für eine Kranvorrichtung, vorgesehen.

In dem ersten Grundkörper 221 ist eine Exzentereinrichtung 226 angeordnet, umfassend eine Mehrzahl von Exzentermassen. Die Exzentereinrichtung 226 umfasst einen Motor 224 zum Antreiben der Exzentermassen. Die Energieversorgung des Motors 224 erfolgt über eine Energieversorgung 228 bzw. einen Generator 228, der über eine Energieleitung 230 mit dem zweiten Grundkörper 232 verbunden ist. Über eine nicht gezeigte weitere Leitung kann der Motor mit Energie versorgt werden.

Die insbesondere paarweise angeordneten Exzentermassen drehen vorzugsweise mit derselben Winkelgeschwindigkeit, jedoch in entgegengesetzter Richtung. Die zumindest zwei Exzenter bzw. Exzentermassen können Zentrifugalkräfte erzeugen. Hierbei können sich die horizontalen Kräfte aufheben, während sich die vertikalen Komponenten zu einer Gesamt-Zentrifugalkraft addieren können, so das Schwingungen hin vertikaler Richtung, also in Richtung der Längsachse des Pfahls 202 erzeugt werden (angedeutet mit dem Pfeil 225). Die hierdurch erzeugten Impulse bzw. Schwingungen können aufgrund der kraftschlüssigen auf den Pfahl übertragen werden und so eine Vielzahl von Dehn- bzw. Impulswellen erzeugen.

Zur Steuerung des Motors 224 kann die Vibratorvorrichtung 220 eine lokale Steuerung 238 umfassen. Diese kann insbesondere den Motor 224 der Vibratorvorrichtung 220 entsprechend den von dem Steuermodul 242 empfangenen Steuerbefehlen steuern.

Wie ferner zu erkennen ist, kann mindestens ein Bewegungsdatensensor 252 vorgesehen sein. Insbesondere kann das Messsystem 200 den mindestens einen Bewegungsdatensensor 252 umfassen. Der Bewegungsdatensensor 252 ist insbesondere zum (kontinuierlichen) Messen von Bewegungsdaten des Pfahls 202 eingerichtet. Hierzu kann der Bewegungsdatensensor 252 (insbesondere ein Dehnungsaufnehmer und/oder ein Beschleunigungsaufnehmer) (kraftschlüssig) an dem Pfahlkopf befestigt sein. Vorzugsweise können zwei Dehnungsaufnehmer und zwei Beschleunigungsaufnehmer vorgesehen sein.

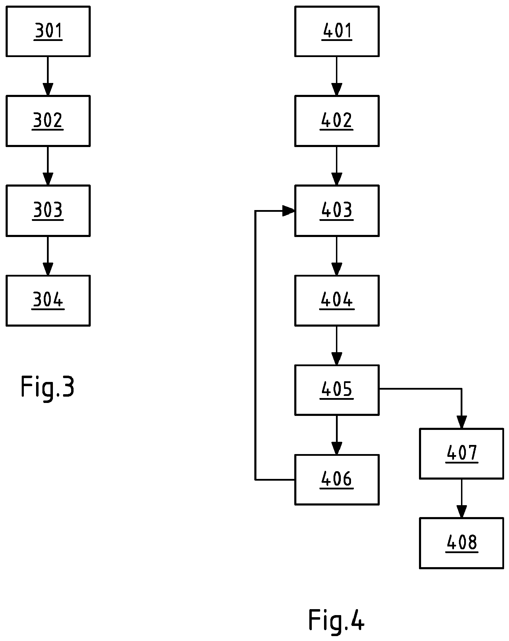

Die Funktionsweise des Messsystems 200 wird nachfolgend näher mit Hilfe der Figur 3 beschrieben. Die Figur 3 zeigt ein Diagramm eines Ausführungsbeispiels eines Verfahrens gemäß der vorliegenden Anmeldung zum Beurteilen der Tragfähigkeit eines eingebrachten Pfahls 202.

In einem ersten Schritt 301 erfolgt ein Beaufschlagen, durch eine an dem eingebrachten Pfahl 202 (kraftschlüssig) angeordnete Vibratorvorrichtung 220, des eingebrachten Pfahls 202 mit einer Messimpulsfolge während mindestens einer Vibrationszeitdauer.

Insbesondere kann ein Steuermodul 242 einen Befehlsdatensatz (enthaltend z.B. Anfangszeitpunkt, Vibrationszeitdauer, Messzeitdauer, Endzeitpunkt, und/oder maximale Messfrequenz) an die lokale Steuerung 238 übertragen. Hierdurch erfolgt insbesondere ein Ansteuern der an dem eingebrachten Pfahl 202 angeordneten Vibratorvorrichtung 220, derart, dass durch die Vibratorvorrichtung 220 der eingebrachte Pfahls 202 mit einer Messimpulsfolge während mindestens einer Vibrationszeitdauer beaufschlagt wird.

In einem weiteren Schritt 302 (der insbesondere parallel zum Schritt 301 durchgeführt wird) erfolgt ein Erfassen, durch mindestens ein Erfassungsmodul 244, von durch die Messimpulsfolge hervorgerufenen Bewegungsdaten des eingebrachten Pfahls während einer Messzeitdauer. Vorzugsweise können als Bewegungsdaten die Beschleunigung und die Stauchung von Impulswellen am Pfahl 202 durch vorzugsweise eine Mehrzahl von entsprechenden Bewegungsdatensensoren 252 gemessen werden. Die Messsignale werden dem Erfassungsmodul 244 bereitgestellt, welches insbesondere mit einer Abtastrate von z.B. mindestens 10.000 Werten pro Sekunde die Bewegungsdaten aufzeichnet.

Die Messzeitdauer liegt insbesondere innerhalb der Vibrationszeitdauer.

In Schritt 303 erfolgt ein Bestimmen mindestens eines Abwärtsbewegungsdatensatzes aus den erfassten Bewegungsdaten. Insbesondere erfolgt durch das Bestimmungsmodul 246 ein Anwenden einer vorbeschriebenen Filterfunktion auf die aufgezeichneten Bewegungsdaten. Hierdurch kann die zu einer Abwärtsbewegung der Vibratorvorrichtung 220 zugehörigen Bewegungsdaten bzw. Impulswellendaten bestimmt werden. Diese Bewegungsdaten bilden insbesondere den mindestens einen Abwärtsbewegungsdatensatz.

Dann erfolgt in Schritt 304 ein Auswerten, durch ein Auswertemodul 348, des mindestens Abwärtsbewegungsdatensatzes, derart, dass ein Tragfähigkeitskriterium bestimmt wird, insbesondere basierend auf mindestens einem Nachweisekriterium.

Das Auswerten des mindestens einen Abwärtsbewegungsdatensatzes kann, gemäß einer bevorzugten Ausführungsform, mittels Modellbildung auf der Grundlage der Wellentheorie erfolgen, z.B. basierend auf dem CAPWAP-Verfahren, TNOWAVE-Verfahren oder CASE Verfahren (diese Verfahren sind dem Fachmann bekannt).

Beispielsweise kann ein Pfahl-Boden-Modell (CAPWAP) durch inverse Systemidentifikation anhand des mindestens einen Abwärtsbewegungsdatensatzes (bzw. -signale) entwickelt werden, aus welchem dann die statischen Pfahlwiderstände (vorzugsweise Mantelreibung und/oder Spitzendruck) abgeleitet werden können, um zu bestimmen, ob eine ausreichende (axiale) Tragfähigkeit des eingebrachten Pfahls vorliegt (oder nicht).

Das Nachweiskriterium kann eine vorgegebene Grenztragfähigkeit sein, welche einzuhalten ist, damit ein eingebrachter Pfahl als ein Pfahl 202 mit einer ausreichenden (axialen) Tragfähigkeit bewertet wird. Wird also das Kriterium nicht eingehalten, ist die axiale Tragfähigkeit nicht ausreichend. Beispielsweise können dann weitere Maßnahmen ergriffen (beispielsweise kann der Pfahl 202 tiefer eingebunden werden) und ggf. eine erneutes Durchführen des vorliegenden Verfahrens durchgeführt werden.

Beispielhaft wird die Analyse /Auswertung anhand des (dem Fachmann grundsätzlich bekannten) CAPWAP Verfahren (Modellanalyse) näher beschrieben. Das CAPWAP (Case Pile Wave Analysis Program) ist ein sogenanntes Signal Matching Programm. Bei dem Verfahren wird davon ausgegangen, dass die durch die Vibratorvorrichtung durch eine Abwärtsbewegung eingeleitete Kraft und deren Antwort bekannt ist (aus Wave Up- und Wave Down-Kurve). Die Bestimmung dieser Bewegungsdaten erfolgt, wie beschrieben, in Schritt 303.

Nicht bekannt bei diesem Verfahren ist jedoch zunächst das statische und dynamische Bodenmodell. Dies wird in der Auswertung bestimmt. Insbesondere werden bei der Auswertung in Schritt 304 die folgenden Schritte durchgeführt:
1. Erstellen eines Pfahlmodells und Treffen einer initialen Annahme für die Mantelreibung und der Fußreibung.
2. Die bestimmten und zuvor gemessenen Daten von Stauchung und/oder Beschleunigung werden als Grundlage für die Berechnung der zugehörigen Kraft verwendet.
3. Dann wird die berechnete Kraft mit der gemessenen Kraft verglichen.
4. Basierend auf dem Vergleichsergebnis werden die Mantelreibung und der Fußreibung angepasst.

Die Schritte 2. bis 4. Werden insbesondere so lange wiederholt, bis eine ausreichende Übereinstimmung in Schritt 3. erreicht wird.

Dann kann, wie beschrieben, anhand eines Nachweiskriteriums bestimmt werden, ob der eingebrachte Pfahl 202 eine ausreichende axiale Tragfähigkeit aufweist oder nicht.

Die Figur 4 zeigt ein Diagramm eines weiteren Ausführungsbeispiels eines Verfahrens gemäß der vorliegenden Anmeldung. Zur Vermeidung von Wiederholungen werden nachfolgend im Wesentlichen nur die Unterschiede zu dem vorherigen Ausführungsbeispiel beschrieben. Das Verfahren gemäß der Figur 4 umfasst insbesondere ein Installationsverfahren.

In einem ersten Schritt 401 wird ein Pfahl an einem bestimmten Installationsort installiert. Insbesondere wird der Pfahl durch eine kraftschlüssig am Pfahlkopf befestigte Vibratorvorrichtung in den Boden eingebracht, insbesondere auf eine bestimmte Einbindetiefe.

Nach der Einbringung des Pfahls und vor dem Beaufschlagen des eingebrachten Pfahls (Schritt 403) mit der Messimpulsfolge kann in Schritt 402 für eine (vorgebbare) erste Festwachszeitdauer der eingebrachte Pfahl nicht mit Impulsen bzw. Schwingungen durch die Vibratorvorrichtung beaufschlagt werden. Für eine besonders genaue Beurteilung wird vorzugsweise nach einem Einbringen des Pfahls auf die bestimmte Einbindetiefe so lange mit der Beaufschlagung mit Schwingungen für die Messung gewartet, bis sichergestellt ist, dass sich der Boden um den Pfahl (ausreichend) gesetzt hat. Die erste Festwachszeitdauer repräsentiert also insbesondere die Zeitdauer, während der keine Impulse durch die Vibratorvorrichtung auf den Pfahl übertragen werden.

Besonders bevorzugt kann die Festwachszeitdauer abhängig von der Bodenart (insbesondere Unterwasserbodenart) an dem Installationsort des Pfahls bestimmt werden, wobei die erste Festwachszeitdauer insbesondere zwischen 10 Minuten und einer Woche liegen kann, vorzugsweise zwischen einer Stunde und einem Tag.

Nach Ablauf der ersten Festwachszeitdauer wird in Schritt 403 der Pfahl mit Schwingungen in Form der Messimpulsfolge beaufschlagt, wie in Schritt 301 beschrieben wurde.

In Schritt 404 erfolgt ein Erfassen von durch die Messimpulsfolge hervorgerufenen Bewegungsdaten des eingebrachten Pfahls während einer Messzeitdauer, wie insbesondere in Schritt 302 beschrieben wurde.

Die maximale Messfrequenz der Messimpulsfolge während der Messzeitdauer kann vorzugsweise zumindest unterhalb einer vorgegebenen Grenzfrequenz liegen. Die Grenzfrequenz kann insbesondere derart gewählt sein, dass sichergestellt ist, dass sich der Boden am Installationsort nicht (wieder) verflüssigt und damit der Pfahl tiefer einsinkt.

Erfindungsgemäß beträgt eine maximale Messfrequenz der Messimpulsfolge (während der Messzeitdauer) maximal 80 % der Einbringungsfrequenz, bevorzugt maximal 60 % der Einbringungsfrequenz, besonders bevorzugt maximal 40 % der Einbringungsfrequenz. Die Einbringungsfrequenz meint insbesondere die (bei der Einbringung maximale) Frequenz, mit der der Pfahl in die bestimmte Einbringungstiefe in Schritt 401 eingebracht wurde. Hierbei ist zu beachten, dass die Einbringungsfrequenz insbesondere von der Bodenart an dem Installationsort des Pfahls abhängt. In entsprechender Weise hängt daher die maximale Messfrequenz von der Bodenart ab.

Darüber hinaus kann eine maximale Messfrequenz der Messimpulsfolge höchstens 10 Hz während der Messzeitdauer betragen, bevorzugt höchstens 8 Hz, besonders bevorzugt höchstens 6 Hz. Die Messfrequenz kann während der Messzeitdauer zwischen 1 Hz und 10 Hz liegen, vorzugsweise zwischen 2 Hz und 8 Hz, besonderes bevorzugt zwischen 3 Hz und 7 Hz.

Für eine besonders exakte und gleichzeitig effektive Auswertung kann die Messzeitdauer zwischen 0,5 Minuten und 20 Minuten liegen, bevorzugt zwischen 2,5 Minuten und 15 Minuten, besonders bevorzugt zwischen 2,5 Minuten und 7,5 Minuten. Die Messzeitdauer kann zumindest von der Bodenart abhängen (ebenso wie die Einbringungszeitdauer).

In Schritt 405 erfolgt ein Bestimmen mindestens eines Abwärtsbewegungsdatensatzes aus den erfassten Bewegungsdaten, wie in Schritt 303 beschrieben wurde.

In dem vorliegenden Ausführungsbeispiel erfolgt nach dem Erfassen (und dem Bestimmen, welches parallel zum Erfassen erfolgen kann), also insbesondere nach der Messzeitdauer und nach einer Abklingzeitdauer ein Schritt 406, in der der Pfahl nicht mit Schwingungen beaufschlagt wird.

Nach dieser zweiten Festwachszeitdauer, die insbesondere kürzer als die erste Festwachszeitdauer sein kann, können die (vorbeschriebenen) Schritte Beaufschlagen (403), Erfassen (404) und Bestimmen (405) erneut durchgeführt werden. Insbesondere kann diese Testprozedur, also Beaufschlagen (403), Erfassen (404) und Bestimmen (405), mehrmals durchgeführt werden, jeweils unterbrochen zumindest um die genannte Abklingzeitdauer und der zweiten Festwachszeitdauer.

Die genannte zweite Festwachszeitdauer kann insbesondere kürzer sein als die erste Festwachszeitdauer und beispielsweise zwischen 1 Minute und 10 Minuten liegen.

Anschließend kann eine (gemeinsame) Auswertung in Schritt 407 (vgl. Schritt 304) der jeweils bestimmten Abwärtsbewegungsdatensätze erfolgen. Durch eine entsprechende Testung kann eine exaktere Auswertung erfolgen.

Das Beurteilungsergebnis kann dann in Schritt 408 ausgegeben und beispielsweise einem Nutzer über eine Anzeige dargestellt werden.

Bei einem anderen (nicht gezeigten) Ausführungsbeispiel können nach Schritt 401 folgende Schritte vorgesehen sein:
- Lösen, nach einem Einbringen des Pfahls auf eine bestimmte Einbindetiefe, einer kraftschlüssigen Verbindung zwischen der Vibratorvorrichtung und dem Pfahl,
- Aufrechterhalten der gelösten kraftschlüssigen Verbindung zwischen der Vibratorvorrichtung und dem Pfahl während einer Festwachszeitdauer,
- wobei das Beaufschlagen des eingebrachten Pfahls mit einer Messimpulsfolge während mindestens einer Vibrationszeitdauer ein erneutes Herstellen der kraftschlüssigen Verbindung zwischen der Vibratorvorrichtung und dem Pfahl während der Vibrationszeitdauer umfasst.

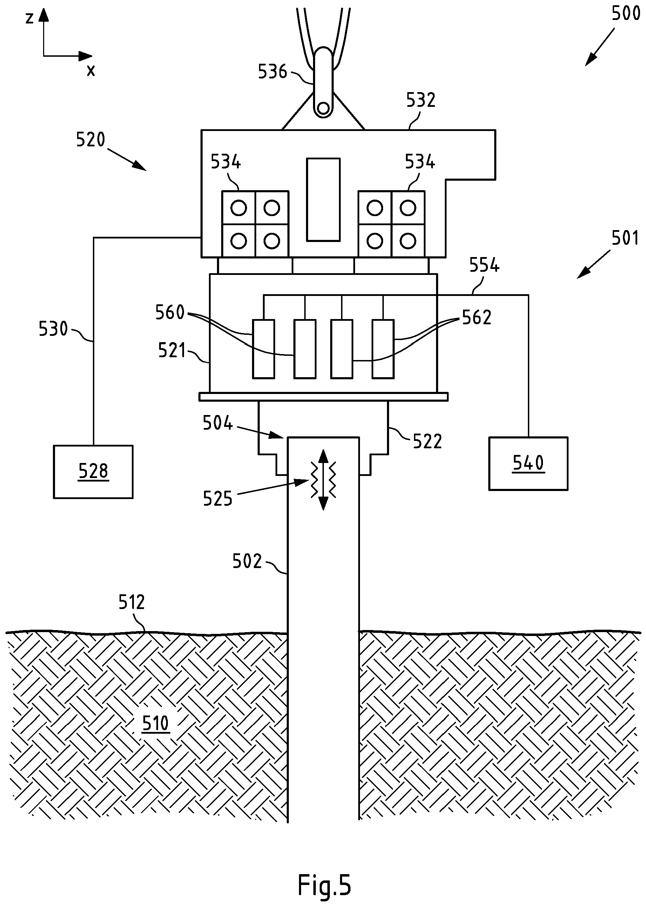

Die Figur 5 zeigt eine schematische Ansicht eines Ausführungsbeispiels einer Vibratorvorrichtung 520 gemäß der vorliegenden Anmeldung. Zur Vermeidung von Wiederholungen werden nachfolgend im Wesentlichen nur die Unterschiede zu dem Ausführungsbeispiel einer Vibratorvorrichtung 220 nach der Figur 2 beschrieben.

Der wesentliche Unterschied besteht darin, dass die Bewegungsdatensensoren 560, 562 (insbesondere zwei Dehnungsmessstreifen 560 und zwei Beschleunigungssensoren 562) an der Vibratorvorrichtung 520 (dauerhaft und insbesondere unlösbar) befestigt sind. Beispielsweise kann der mindestens eine Bewegungsdatensensor 560, 562 an der Außenseite der Vibratorvorrichtung 520 befestigt sein.

Wie aus der Figur 5 zu erkennen ist, ist der mindestens eine Bewegungsdatensensor 560, 562 an einem Teil 521 der Vibratorvorrichtung 520 befestigt, der ebenfalls die Schwingungen (nahezu ungedämpft) erfährt. Beispielhaft ist der mindestens eine Bewegungsdatensensor 560, 562 an dem ersten Grundkörper 521 befestigt, der die Exzentereinrichtung 526 umfasst. Über das mindestens eine Befestigungsmodul 522, welches kraftschlüssig mit einem Pfahl verbindbar ist, werden die erzeugten Schwingungen bzw. Vibrationen, insbesondere in Form der Messimpulsfolge, auf den Pfahl übertragen. **In** entsprechender Weise können die durch den Pfahlfuß reflektierten Impulswellen auf die Vibratorvorrichtung 520, insbesondere das Befestigungsmodul 522 und den ersten Grundkörper 521, übertragen werden und von dem mindestens einen Bewegungsdatensensor 560, 562 gemessen werden.

Bei anderen Varianten der Anmeldung kann der mindestens eine Bewegungsdatensensor alternativ oder zusätzlich an einer anderen Position befestigt sein, beispielsweise an dem Befestigungsmodul.

Eine Messeinrichtung 540 kann mit dem mindestens einen Bewegungsdatensensor 560, 562 kommunikativ verbunden werden. Bei Varianten der Anmeldung kann die Messeinrichtung auch an der Vibratorvorrichtung angeordnet und/oder von dieser umfasst sein und beispielsweise das mindestens eine Auswerteergebnis an mindestens ein Nutzerendgerät übertragen.

Anmeldungsgemäß kann ein Pfahl mittels Vibrator/Vibratorvorrichtung in den Untergrund auf eine bestimmte End-/Zieltiefe gebracht werden, was mit dem Abschalten des Vibrationssystems verbunden sein kann.

Während der letzten Zentimeter des Eindringvorgangs können Bewegungsdaten der z.B. am Pfahl befestigten Bewegungsdatensensoren (vorzugsweise Dehnung und/oder Beschleunigung) mittels Datalogger aufgezeichnet. Dieser Vorgang ist als "End of Driving" bekannt und charakterisiert insbesondere den EoD -Wert). Anschließend wird das anmeldungsgemäße Verfahren durchgeführt, welches auch als dynamischer Vibro-Restrike-Versuch bezeichnet werden kann. Insbesondere kann wie folgt vorgegangen werden (wie auch bereits beschrieben wurde):
- Warten, bis der Boden sich "beruhigt" hat bzw. festgewachsen ist, d.h. der aufgebaute Porenwasserüberdruck sich zumindest weitgehend auf den ursprünglichen (also vor der Installation des Pfahls) Wert eingependelt hat. Die Dauer/Festwachszeitdauer kann je nach Bodenbeschaffenheit zwischen wenigen Minuten und einigen Stunden bis hin zu Tagen betragen. Ein vorzeitiges Ausführen des Vibro-Restrike-Versuchs ist jedoch immer möglich, jedoch sind die Ergebnisse dann entsprechend zu bewerten.
- Anschließend erfolgt insbesondere ein kurzes Anfahren des Vibrators/Vibratorvorrichtung auf dem Pfahl für wenige Sekunden bis hin zu einigen Minute während parallel die am Pfahl befestigten Bewegungsdatensensoren die Bewegungsdaten mittels Logger/Erfassungsmodul aufzeichnen. Ein nennenswertes (weiteres) Einsinken des Pfahls ist hier nicht zu erwarten und kann ggfs. durch das rechtzeitige Abstellen des Vibrators verhindert werden.

Der zuvor beschriebene Vorgang kann nach mehreren Tagen bis hin zu mehreren Wochen wiederholt werden um einen möglichen Anwachseffekt des Pfahls zu bestimmen und insbesondere nachzuweisen.

Die Vibrationsfrequenz kann beim Einbringen von Offshore-Pfählen üblicherweise zwischen ca. 10 und 25 Hz liegen. Insbesondere kann diese Einbringfrequenz von der Eindringtiefe und dem Zustand und/oder Art des Bodens abhängen. Beim erneuten Anfahren des Vibrators, also dem Beaufschlagen des Pfahls mit einer Messimpulsfolge, (zur Ausführung des Vibro-Restrike-Versuches), kann dies derart erfolgen, dass die maximale Messfrequenz (deutlich) geringer ist, als im kontinuierlichen Prozess. Hier sind reduzierte Werte der Systemfrequenz von vorzugsweise über 40 % denkbar.

Des Weiteren ist davon auszugehen, dass für eine Auswertung der erfassten Bewegungsdaten eine Durchführung des sogenannten kavitativen Vibrationsrammens zur eindeutigen Identifizierung der Abwärtsbewegungsdaten durch das Bestimmungsmodul von Vorteil ist. Daher wird gemäß einer bevorzugten Ausführung das kavitative Vibrationsrammen durchgeführt.

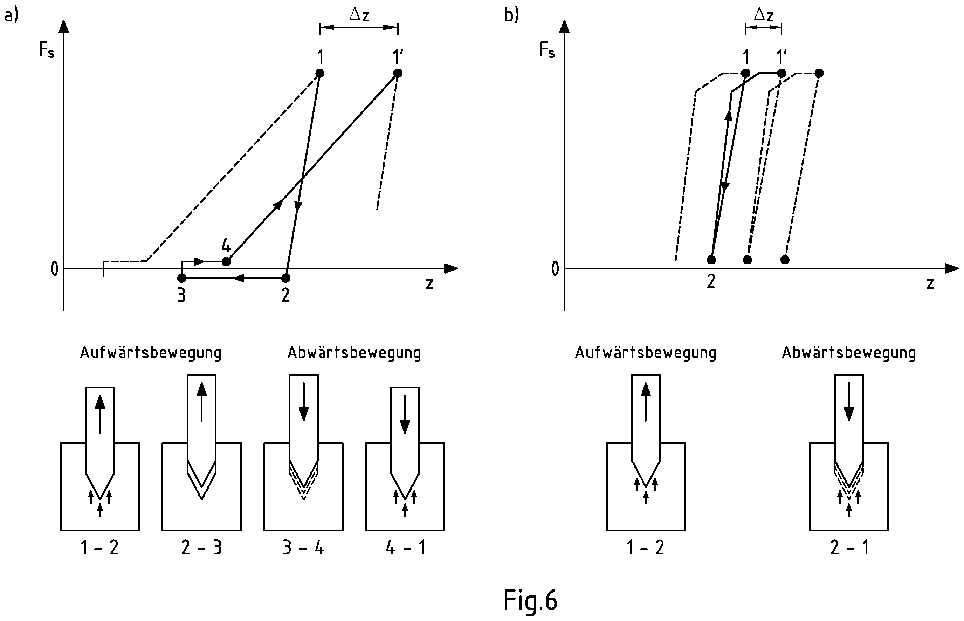

Wie der Figur 6 entnommen werden kann, findet im Gegensatz zum nicht-kavitativen Vibrationsrammen (Fig. 6 b) ein Kontaktverlust beim kavitativen Vibrationsrammen (Fig. 6 a) zwischen Boden und Pfahl bei der Aufwärtsbewegung statt. Diese Erkenntnis kann bei der Filterfunktion verwendet werden, so dass die gewünschten Bewegungsdaten eines Abwärtsimpulses mit höherer Genauigkeit bestimmt/identifiziert werden kann.

Mittels Vibrator/Vibratorvorrichtung können Pfähle schnell und geräuscharm in den Untergrund eingebracht werden. Der Vibrator erzeugt insbesondere durch mindestens zwei rotierende Unwuchten eine schnelle Abfolge an Auf- und Abwärtsbewegungen (Schwingungen bzw. Impulsfolgen), bei denen der Boden z.T. in einen verflüssigten Zustand überführt wird.

Mit diesem Verfahren kann die Kraft als auch die Geschwindigkeit des Eindringprozesses am Pfahlkopf mit einer hohen Abtastrate am vibrierten Pfahl aufgezeichnet werden. Die hohe Abtastrate ermöglicht es, dass einzelne Abwärtsbewegungen mit ausreichenden Messewerten eindeutig identifiziert werden können. Die Auswertung dieser bestimmten Bewegungsdaten erfolgt insbesondere mittels vollständiger Modellbildung auf der Grundlage der Wellentheorie (z.B. CAPWAP- oder TNOWAVE-Verfahren).

Als Ergebnis kann die Widerstand-Setzungslinie und/oder die Verteilung von Pfahlmantel- und Pfahlfußwiderstand ermittelt werden. Störeinflüsse der Aufwärtsbewegung können ggfs. Rechnerisch (z.B. durch die Filterfunktion) eliminiert werden. Damit der Pfahlwiderstand auch nach dem Installationsprozess erfasst werden kann, kann mindestens einmal nach einer festzulegenden Zeit der Vibrator erneut gestartet und der Widerstand der Abwärtsbewegung des Pfahls messtechnisch im "beruhigtem" Boden erfasst werden. Die tatsächliche Tragfähigkeit des Pfahls kann somit zum gewählten Zeitpunkt bestimmt werden.

## Patentansprüche

1. Verfahren zum Beurteilen der Tragfähigkeit eines eingebrachten Pfahls (102, 202), umfassend:
- Einbringen des Pfahls (102, 202) durch eine Vibratorvorrichtung (220, 520) mit einer maximalen Einbringungsfrequenz,
- Beaufschlagen, durch die an dem eingebrachten Pfahl (102, 202) angeordnete Vibratorvorrichtung (220, 520), nach der Einbringung des eingebrachten Pfahls (102, 202) mit einer Messimpulsfolge während mindestens einer Vibrationszeitdauer, wobei eine maximale Messfrequenz der Messimpulsfolge maximal 80 % der maximalen Einbringungsfrequenz beträgt,
- Erfassen, durch mindestens ein Erfassungsmodul (244), von durch die Messimpulsfolge hervorgerufenen Bewegungsdaten des eingebrachten Pfahls (102, 202) während einer Messzeitdauer,
- Bestimmen mindestens eines Abwärtsbewegungsdatensatzes aus den erfassten Bewegungsdaten, und
- Auswerten des Abwärtsbewegungsdatensatzes, derart, dass ein Tragfähigkeitskriterium bestimmt wird.

2. Verfahren nach Anspruch 1, **dadurch gekennzeichnet, dass**
- das Erfassen der Bewegungsdaten mit einer Abtastrate von zumindest 10.000 Werten pro Sekunde erfolgt, insbesondere mit einer Abtastrate von zumindest 40.000 Werten pro Sekunde.

3. Verfahren nach Anspruch 1 oder 2, **dadurch gekennzeichnet, dass**
- die maximale Messfrequenz der Messimpulsfolge zumindest unterhalb einer Grenzfrequenz liegt.

4. Verfahren nach einem der vorherigen Ansprüche, **dadurch gekennzeichnet, dass**
- die maximale Messfrequenz der Messimpulsfolge maximal 60 % der Einbringungsfrequenz beträgt, besonders bevorzugt maximal 40 % der Einbringungsfrequenz.

5. Verfahren nach einem der vorherigen Ansprüche, **dadurch gekennzeichnet, dass**
- die maximale Messfrequenz der Messimpulsfolge höchstens 10 Hz beträgt, bevorzugt höchstens 8 Hz, besonders bevorzugt höchstens 6 Hz.

6. Verfahren nach einem der vorherigen Ansprüche, **dadurch gekennzeichnet, dass**
- die Messzeitdauer zwischen 0,5 Minuten und 20 Minuten liegt, bevorzugt zwischen 1,5 Minuten und 15 Minuten, besonders bevorzugt zwischen 2,5 Minuten und 7,5 Minuten.

7. Verfahren nach einem der vorherigen Ansprüche, **dadurch gekennzeichnet, dass**
- vor dem Beaufschlagen des eingebrachten Pfahls (102, 202) mit der Messimpulsfolge für eine Festwachszeitdauer der eingebrachte Pfahl nicht mit Impulsen durch die Vibratorvorrichtung (220, 520) beaufschlagt wird.

8. Verfahren nach Anspruch 7, **dadurch gekennzeichnet, dass**
- die Festwachszeitdauer abhängig von der Unterwasserbodenart an dem Installationsort des Pfahls (102, 202) bestimmt wird,
- wobei die Festwachszeitdauer insbesondere zwischen 10 Minuten und einer Woche liegt, vorzugsweise zwischen einer Stunde und einem Tag.

9. Verfahren nach einem der vorherigen Ansprüche, **dadurch gekennzeichnet, dass** das Verfahren ferner umfasst:
- Lösen, nach einem Einbringen des Pfahls (102, 202) auf eine bestimmte Einbindetiefe, einer kraftschlüssigen Verbindung zwischen der Vibratorvorrichtung (220, 520) und dem Pfahl (102, 202),
- Aufrechterhalten der gelösten kraftschlüssigen Verbindung zwischen der Vibratorvorrichtung (220, 520) und dem Pfahl (102, 202) während einer Festwachszeitdauer,
- wobei das Beaufschlagen des eingebrachten Pfahls (102, 202) mit einer Messimpulsfolge während mindestens einer Vibrationszeitdauer ein erneutes Herstellen der kraftschlüssigen Verbindung zwischen der Vibratorvorrichtung (220, 520) und dem Pfahl (102, 202) während der Vibrationszeitdauer umfasst.

10. Messsystem (200), umfassend:
- eine Vibratorvorrichtung (220, 520), eingerichtet zum Einbringen eines Pfahls (102, 202) mit einer maximalen Einbringungsfrequenz,
- mindestens ein Steuermodul (242), eingerichtet zum Ansteuern der an dem eingebrachten Pfahl (102, 202) angeordneten Vibratorvorrichtung (220, 520), derart, dass durch die Vibratorvorrichtung (220, 520) der eingebrachte Pfahl (102, 202) mit einer Messimpulsfolge während mindestens einer Vibrationszeitdauer beaufschlagt wird, wobei eine maximale Messfrequenz der Messimpulsfolge maximal 80 % der maximalen Einbringungsfrequenz beträgt,
- mindestens ein Erfassungsmodul (244), eingerichtet zum Erfassen von durch die Messimpulsfolge bewirkten Bewegungsdaten des eingebrachten Pfahls (102, 202) während einer Messzeitdauer,
- mindestens ein Bestimmungsmodul (246), eingerichtet zum Bestimmen mindestens eines Abwärtsbewegungsdatensatzes aus den erfassten Bewegungsdaten, und
- mindestens ein Auswertemodul (248), eingerichtet zum Auswerten des Abwärtsbewegungsdatensatzes, derart, dass ein Tragfähigkeitskriterium bestimmt wird.

11. Messsystem (200) nach Anspruch 10, **dadurch gekennzeichnet, dass**
- das Messsystem (200) mindestens eine mit einem Pfahl (102, 202) kraftschlüssig verbindbare Vibratorvorrichtung (220, 520) umfasst,
- wobei an der Vibratorvorrichtung (220, 520) mindestens ein Bewegungsdatensensor angeordnet ist.

12. Computerprogrammprodukt mit Instruktionen ausführbar auf einen Prozessor, wobei die Instruktionen so angepasst sind, dass der Prozessor die folgenden Schritte ausführt:
- Ansteuern einer Vibratorvorrichtung (220, 520) zum Einbringen eines Pfahls (102, 202) mit einer maximalen Einbringungsfrequenz,
- Ansteuern der an dem eingebrachten Pfahl (102, 202) angeordneten Vibratorvorrichtung (220, 520), derart, dass die Vibratorvorrichtung (220, 520) den eingebrachten Pfahl (102, 202) mit einer Messimpulsfolge während mindestens einer Vibrationszeitdauer beaufschlagt, wobei eine maximale Messfrequenz der Messimpulsfolge maximal 80 % der maximalen Einbringungsfrequenz beträgt,
- Erfassen von durch die Messimpulsfolge bewirkten Bewegungsdaten des eingebrachten Pfahls (102, 202) während einer Messzeitdauer,
- Bestimmen mindestens eines Abwärtsbewegungsdatensatzes aus den erfassten Bewegungsdaten, und
- Auswerten des Abwärtsbewegungsdatensatzes, derart, dass ein Tragfähigkeitskriterium bestimmt wird.

## Claims

1. A method for assessing the load bearing capacity of an inserted pile (102, 202), , comprising:
- inserting the pile (102, 202) by a vibrator device (220, 520) with a maximum inserting frequency,
- applying, by the vibrator device (220, 520) arranged at the inserted pile (102, 202), after the insertion of the inserted pile (102, 202) with a measuring pulse string during at least one vibration time period, wherein a maximum measuring frequency of the measuring pulse string is at most 80 % of the maximum inserting frequency,
- detecting, by at least one detection module (244), motion data of the inserted pile (102, 202) caused by the measuring pulse string during a measuring time period,
- determining at least one downward motion data set from the detected motion data; and
- evaluating the downward motion data set such that a load bearing capacity criterion is determined.

2. The method according to claim 1, **characterized in that**
- the motion data is detected at a sampling rate of at least 10,000 values per second, in particular at a sampling rate of at least 40,000 values per second.

3. The method according to claim 1 or 2, **characterized in that**
- the maximum measuring frequency of the measuring pulse string is at least below a limit frequency.

4. The method according to any one of the preceding claims, **characterized in that**
- the maximum measuring frequency of the measuring pulse string is at most 60 % of the inserting frequency, particularly preferably at most 40 % of the inserting frequency.

5. The method according to any one of the preceding claims, **characterized in that**
- the maximum measuring frequency of the measuring pulse string is at most 10 Hz, preferably at most 8 Hz, particularly preferably at most 6 Hz.

6. The method according to any one of the preceding claims, **characterized in that**
- the measuring time period is between 0.5 minutes and 20 minutes, preferably between 1.5 minutes and 15 minutes, particularly preferably between 2.5 minutes and 7.5 minutes.

7. The method according to any one of the preceding claims, **characterized in that**
- before applying the measuring pulse string to the inserted pile (102, 202) for a fixed growth time period, the inserted pile is not applied with pulses by the vibrator device (220, 520).

8. The method according to claim 7, **characterized in that**
- the fixed growth time period is determined depending on the underwater soil type at the installation site of the pile (102, 202),
- wherein the fixed growth time period is in particular between 10 minutes and one week, preferably between one hour and one day.

9. The method according to any one of the preceding claims, **characterized in that** the method further comprises:
- releasing, after inserting of the pile (102, 202) to a specified anchoring depth, a force-fit connection between the vibrator device (220, 520) and the pile (102, 202),
- maintaining the released force-fit connection between the vibrator device (220, 520) and the pile (102, 202) during a fixed growth time period,
- wherein applying a measuring pulse string to the inserted pile (102, 202) during at least one vibration time period comprises re-establishing the force-fit connection between the vibrator device (220, 520) and the pile (102, 202) during the vibration time period.

10. A measuring system (200), comprising:
- a vibrator device (220, 520) configured to insert a pile (102, 202) with a maximum inserting frequency,
- at least one control module (242) configured to control the vibrator device (220, 520) arranged at the inserted pile (102, 202) in such a way that the inserted pile (102, 202) is applied with a measuring pulse string by the vibrator device (220, 520) during at least one vibration time period, wherein a maximum measurement frequency of the measuring pulse string is at most 80% of the maximum inserting frequency,
- at least one detection module (244) configured to detect motion data of the inserted pile (102, 202) caused by the measuring pulse string during a measuring time period,
- at least one determination module (246) configured to determine at least one downward motion data set from the detected motion data, and
- at least one evaluation module (248) configured to evaluate the downward motion data set such that a load bearing capacity criterion is determined.

11. The measuring system (200) according to claim 10, **characterized in that**
- the measuring system (200) comprises at least one vibrator device (220, 520) that is connectable to a pile (102, 202) in a force-fit manner,
- wherein at least one motion data sensor is arranged at the vibrator device (220, 520).

12. A computer program product having instructions executable on a processor, wherein the instructions are adapted to cause the processor to perform the following steps:
- controlling a vibrator device (220, 520) for inserting a pile (102, 202) with a maximum inserting frequency
- controlling the vibrator device (220, 520) arranged at the inserted pile (102, 202) in such a way that the vibrator device (220, 520) applies a measuring pulse string to the inserted pile (102, 202) during at least one vibration time period, wherein a maximum measurement frequency of the measuring pulse string is at most 80% of the maximum inserting frequency,
- detecting motion data of the inserted pile (102, 202) caused by the measuring pulse string during a measuring time period,
- determining at least one downward motion data set from the detected motion data; and
- evaluating the downward motion data set such that a load bearing capacity criterion is determined.

## Revendications

1. Méthode pour évaluer une capacité de charge d'un pieu (102, 202) introduit, comprenant :
- introduire le pieu (102, 202) par un dispositif à vibration (220, 520) à une fréquence d'introduction maximale,
- appliquer, par le dispositif à vibration (220, 520) disposé sur le pieu introduit (102, 202), après l'introduction du pieu introduit (102, 202), un train d'impulsions de mesure pendant au moins une durée de vibration, où une fréquence de mesure maximale du train d'impulsions de mesure est au maximum de 80 % de la fréquence d'introduction maximale,
- acquérir, par au moins un module d'acquisition (244), de données de mouvement du pieu (102, 202) introduit, provoquées par le train d'impulsions de mesure, pendant une durée de mesure,
- déterminer au moins un ensemble de données de mouvement vers le bas à partir des données de mouvement acquises, et
- évaluer l'ensemble de données de mouvement vers le bas, de telle sorte qu'un critère de capacité de charge est déterminé.

2. Méthode selon la revendication 1, **caractérisé en ce que**
- acquérir les données de mouvement s'effectue à une fréquence d'échantillonnage d'au moins 10 000 valeurs par seconde, en particulier à une fréquence d'échantillonnage d'au moins 40 000 valeurs par seconde.

3. Méthode selon la revendication 1 ou 2, **caractérisé en ce que**
- la fréquence de mesure maximale du train d'impulsions de mesure est au moins inférieure à une fréquence limite.

4. Méthode selon l'une des revendications précédentes, **caractérisé en ce que**
- la fréquence de mesure maximale du train d'impulsions de mesure a au maximum 60 % de la fréquence d'introduction, de préférence au maximum 40 % de la fréquence d'introduction.

5. Méthode selon l'une des revendications précédentes, **caractérisé en ce que**
- la fréquence de mesure maximale du train d'impulsions de mesure est d'au plus 10 Hz, de préférence d'au plus 8 Hz, de manière particulièrement préférée d'au plus 6 Hz.

6. Méthode selon l'une des revendications précédentes, **caractérisé en ce que**
- la durée de mesure est comprise entre 0,5 minute et 20 minutes, de préférence entre 1,5 minute et 15 minutes, de manière particulièrement préférée entre 2,5 minutes et 7,5 minutes.

7. Méthode selon l'une des revendications précédentes, **caractérisé en ce que**
- avant d'appliquer le train d'impulsions de mesure au pieu introduit (102, 202) pendant une durée d'ancrage, le pieu mis en place n'est pas soumis à des impulsions par le dispositif à vibration (220, 520).

8. Méthode selon la revendication 7, **caractérisé en ce que**
- la durée d'ancrage est déterminée en fonction du type de sol sous-marin à l'emplacement d'installation du pieu (102, 202),
- où la durée d'ancrage est en particulier comprise entre 10 minutes et une semaine, de préférence entre une heure et un jour.

9. Méthode selon l'une des revendications précédentes, **caractérisé en ce que** la méthode comprend en outre :
- détacher, après une mise en place du pieu (102, 202) à une profondeur d'encastrement particulière, une liaison de force entre le dispositif à vibration (220, 520) et le pieu (102, 202),
- maintenir la liaison de force détachée entre le dispositif à vibration (220, 520) et le pieu (102, 202) pendant une période d'ancrage,
- où l'application d'un train d'impulsions de mesure au pieu (102, 202) introduit pendant au moins une période de vibration comprend un rétablissement de la liaison par adhérence entre le dispositif à vibration (220, 520) et le pieu (102, 202) pendant la période de vibration.

10. Système de mesure (200), comprenant :
- un dispositif vibrant (220, 520) configuré pour introduire un pieu (102, 202) à une fréquence d'insertion maximale,
- au moins un module de commande (242), configuré pour commander le dispositif à vibration (220, 520) disposé sur le pieu (102, 202) introduit, de telle sorte que le pieu (102, 202) introduit est soumis par le dispositif à vibration (220, 520) à un train d'impulsions de mesure pendant au moins une durée de vibration, où une fréquence de mesure maximale du train d'impulsions de mesure a au maximum 80 % de la fréquence d'introduction maximale,
- au moins un module d'acquisition (244), configuré pour acquérir des données de mouvement du pieu (102, 202) mis en place, provoquées par le train d'impulsions de mesure, pendant une durée de mesure,
- au moins un module de détermination (246), configuré pour déterminer au moins un ensemble de données de mouvement vers le bas à partir des données de mouvement acquises, et
- au moins un module d'évaluation (248), configuré pour évaluer l'ensemble de données de mouvement vers le bas, de telle sorte qu'un critère de capacité de charge est déterminé.

11. Système de mesure (200) selon la revendication 10, **caractérisé en ce que**
- le système de mesure (200) comprend au moins un dispositif à vibration (220, 520) reliable par liaison de force à un pieu (102, 202),
- où au moins un capteur de données de mouvement est disposé sur le dispositif vibrant (220, 520).

12. Produit de programme informatique comprenant des instructions exécutables sur un processeur, où les instructions sont adaptées de tel sorte que le processeur exécute les étapes suivantes :
- commander un dispositif à vibration (220, 520) pour introduire un pieu (102, 202) à une fréquence d'introduction maximale,
- commander le dispositif vibrant (220, 520) disposé sur le pieu (102, 202) introduit, de telle sorte que le dispositif vibrant (220, 520) sollicite le pieu (102, 202) introduit avec un train d'impulsions de mesure pendant au moins une durée de vibration, où une fréquence de mesure maximale du train d'impulsions de mesure est au maximum de 80 % de la fréquence d'introduction maximale,
- saisir des données de mouvement du pieu (102, 202) introduit, provoquées par le train d'impulsions de mesure, pendant une durée de mesure,
- déterminer au moins un ensemble de données de mouvement vers le bas à partir des données de mouvement saisies, et
- évaluer l'ensemble de données de mouvement vers le bas, de telle sorte qu'un critère de capacité de charge est déterminé.
